# EUROPÄISCHE PATENTSCHRIFT

(11) **EP 2 851 519 B1**
(45) Veröffentlichungstag und Bekanntmachung des Hinweises auf die Patenterteilung: **31.01.2018**
(21) Anmeldenummer: 13185071.1
(22) Anmeldetag: 19.09.2013
(51) Int. Cl.: F01D 11/12

(54) **Dichtungsanordnung für eine Strömungsmaschine und Herstellverfahren hierfür**
Sealing assembly for a turbo engine and production method for the same
Dispositif d'étanchéité pour une turbomachine et son procédé de fabrication

(43) Veröffentlichungstag der Anmeldung: 25.03.2015
(73) Patentinhaber: MTU Aero Engines AG, 80995 München (DE)
(72) Erfinder: Schmid, Siegfried, 85302 Gerolsbach (DE); Schober, Michael, 80999 München (DE); Sikorski, Siegfried, 80997 München (DE); Mattschas, Axel, 82319 Starnberg (DE); Bader, Robert, 85406 Zolling (DE)

(56) Entgegenhaltungen:
- EP-A1- 1 992 823
- US-A- 2 962 809

## Beschreibung

### HINTERGRUND DER ERFINDUNG

### GEBIET DER ERFINDUNG

Die vorliegende Erfindung betrifft eine Dichtungsanordnung für eine Strömungsmaschine, insbesondere eine stationäre Gasturbine oder ein Flugzeugtriebwerk, sowie ein Herstellungsverfahren hierfür.

### STAND DER TECHNIK

Bei Strömungsmaschinen, wie stationären Gasturbinen oder Flugzeugtriebwerk, dreht sich vereinfacht ausgedrückt ein Rotor um eine Achse gegenüber einem feststehenden Stator. Der Stator weist Leitschaufeln auf, die den durch die Strömungsmaschine strömenden Gasstrom auf die sich drehenden Laufschaufeln des Rotors lenken.

Um einen hohen Wirkungsgrad der Strömungsmaschine zu erzielen, müssen die Spalte zwischen dem Rotor und dem Stator an den radial innen liegenden Enden der Leitschaufeln einerseits und dem Rotor andererseits sowie den radial außen liegenden Enden der Laufschaufeln einerseits und dem Stator andererseits möglichst klein gehalten werden, um Strömungsverluste zu vermeiden. Entsprechend sind hierfür Dichtungsanordnungen bekannt, die als Inner Air Seals oder Outer Air Seals bezeichnet werden, je nachdem, ob sie an den innen liegenden Enden der Leitschaufeln oder an den radial außen liegenden Enden der Laufschaufeln angeordnet sind.

Aus der DE 10 2008 019 890 A1 ist bereits eine Dichtungsanordnung in Form eines radial innen angeordneten Innenrings für einen Leitschaufelkranz bekannt, welche aus einem Dichtungsträger und einem Anstreifbelag gebildet ist, wobei der Anstreifbelag dazu dient beispielsweise mit Dichtfinnen des Rotors zusammen zu wirken, um eine Spaltabdichtung zu bewirken. Hierbei schleifen sich die Dichtfinnen in den Anstreifbelag der Dichtungsanordnung ein. Sowohl der Dichtungsträger als auch der Anstreifbelag sind bei der Dichtungsanordnung der DE 10 2008 019 890 A1 aus faserverstärkten Kunststoffen gebildet.

Obwohl damit bereits eine Dichtungsanordnung bekannt ist, die aufgrund der gleichartigen Ausbildung des Dichtungsträgermaterials und des Materials für den Anstreifbelag einfach herzustellen ist, besteht weiterhin Bedarf an Dichtungsanordnungen, die unterschiedliche Materialien für den Dichtungsträger und den Anstreifbelag aufweisen, um den unterschiedlichen Anforderungen an Dichtungsträger und Anstreifbelag besser gerecht zu werden, wobei gleichzeitig eine einfache Herstellbarkeit gegeben sein soll.

So ist beispielsweise in der DE 10 2008 019 890 A1 beschrieben, dass ein vorteilhafter Dichtungsträger aus faserverstärktem Kunststoff gebildet sein könnte, während der Anstreifbelag aus einem Silikonwerkstoff (Polysiloxan - Werkstoff) gebildet sein könnte. Allerdings ist diese Werkstoffkombination nachteilhaft, da die einzige Möglichkeit der Verbindung dieser Materialien durch Aufkleben des Anstreifbelags auf den Dichtungsträger sehr aufwändig ist und Probleme hinsichtlich der Gewährleistung der vorgeschriebenen Lebensdauer entstehen könnten.

Im Dokument EP 1 992 823 A1 wird eine Dichtungsanordnung aus einem Dichtungsträger und einem Anstreifbelag offenbart, die beide aus dem gleichen Verbundmaterial gebildet sind und zusammen ausgehärtet werden. Das Dokument US 2,962,809 A beschreibt einen Anstreifbelag aus einem Gemisch aus einem Silikonharz und einem Füllmaterial, wie Graphit oder Asbest, welcher auf einem metallischen Kompressorgehäuse aufgebracht ist.

### OFFENBARUNG DER ERFINDUNG

### AUFGABE DER ERFINDUNG

Es ist deshalb Aufgabe der vorliegenden Erfindung, eine Dichtungsanordnung für eine Strömungsmaschine sowie ein Herstellungsverfahren für eine Dichtungsanordnung bereitzustellen, wobei die Dichtungsanordnung eine für die Anforderungen optimierte Werkstoffauswahl aufweist, insbesondere unterschiedliche Werkstoffe für Dichtungsträger und Anstreifbelag, und gleichzeitig das Herstellungsverfahren einfach durchführbar ist.

### TECHNISCHE LÖSUNG

Diese Aufgabe wird gelöst durch ein Verfahren zur Herstellung einer Dichtungsanordnung mit den Merkmalen des Anspruchs 1 und eine Dichtungsanordnung mit den Merkmalen des Anspruchs 10 sowie eine Strömungsmaschine mit den Merkmalen des Anspruchs 14. Vorteilhafte Ausgestaltungen sind Gegenstand der abhängigen Ansprüche.

Die vorliegende Erfindung schlägt zur Lösung der oben genannten Aufgabe vor, eine Dichtungsanordnung bereitzustellen, bei der der Dichtungsträger aus einem faserverstärkten Kunststoff und der Anstreifbelag aus einem Polysiloxan - Werkstoff gebildet ist, wobei die Anordnung des Anstreifbelags aus Polysiloxan an dem Dichtungsträger aus dem faserverstärktem Kunststoff dadurch erfolgt, dass sowohl Dichtungsträger als auch Anstreifbelag in einem nicht ausgehärteten Zustand in der gewünschten Art und Weise zueinander angeordnet werden und anschließend einem gemeinsamen Aushärtungsprozess unterzogen werden, so dass der faserverstärkte Kunststoff und das Polysiloxan bei der Aushärtung miteinander chemisch vernetzen. Dadurch kann in einfacher Weise ohne Verwendung zusätzlicher Bindemittel, wie beispielsweise Klebstoffe oder dergleichen, eine zuverlässige und dauerhafte Verbindung zwischen dem Dichtungsträger und dem Anstreifbelag hergestellt werden, wobei der Herstellungsprozess gegenüber dem Stand der Technik deutlich vereinfacht werden kann.

Insbesondere lässt sich bei einem derartigen Herstellverfahren die Formgebung des Dichtungsträgers und/oder des Anstreifbelags mit der Vernetzung mit der jeweiligen anderen Komponente verbinden, so dass eine Vielzahl aufwändiger Produktionsschritte vermieden werden kann und vorzugsweise Formgebung und Verbindung von Dichtungsträger und Anstreifbelag in einem einzigen Arbeitsgang bewerkstelligt werden kann.

Der faserverstärkte Kunststoff kann Fasern in Form von Kohlenstofffasern, Glasfasern, Aramidfasern, Polyesterfasern, Polyvinylacetatfasern, Polypropylenfasern und/oder Polyethylenfasern umfassen und das Matrixmaterial des faserverstärkten Kunststoffs kann ein duroplastischer oder thermoplastischer Kunststoff sein. Besonders bevorzugt ist ein duroplastischer Kunststoff, der nach dem Aushärten bei Temperaturbelastung keine Formänderung mehr erfährt. Insbesondere kann als Matrixmaterial für den faserverstärkten Kunststoff Polyamidharz, Phenolharz, Vinylester und/oder Epoxidharz eingesetzt werden.

Polysiloxane, die auch als Silikonwerkstoffe bezeichnet werden und die für den Anstreifbelag vorgesehen sind, sind synthetische Polymere, bei denen in den Polymerketten Siliziumatome über Sauerstoffatome verknüpft sind. Bei der vorliegenden Erfindung können unterschiedliche Polysiloxan - Werkstoffe mit verschiedenen Substituenten an den Polymerketten und/oder Zuschlagsstoffen eingesetzt werden.

Bei dem Herstellungsverfahren können sowohl der Dichtungsträger als auch der Anstreifbelag gemeinsam in einem Produktionsschritt geformt und jeweils für sich und untereinander ausgehärtet bzw. chemisch vernetzt werden. Allerdings ist auch eine separate Herstellung von entweder dem Dichtungsträger oder dem Anstreifbelag oder beiden als nicht ausgehärtete Halbzeuge möglich, die dann entweder jeweils im Formgebungsprozess der anderen Komponente eingesetzt werden können oder nach gegenseitiger geeigneter Anordnung miteinander ausgehärtet werden. Mit anderen Worten kann entweder der Dichtungsträger oder der Anstreifbelag als nicht ausgehärtetes Halbzeug ausgebildet werden und dann beim Formgebungsprozess der anderen Komponente so in einer Form angeordnet werden, dass bei der Formgebung der entsprechenden Komponente gleichzeitig die Vernetzung mit dem nicht ausgehärteten Halbzeug erfolgt. Alternativ können Dichtungsträger und Anstreifbelag als nicht ausgehärtete Halbzeuge hergestellt werden und diese können dann durch einen gemeinsamen Härtungsprozess miteinander vernetzt werden.

Der Dichtungsträger kann durch Spritzpressen, Strangziehen, Harzinjektionsverfahren oder Prepreg -Verfahren hergestellt werden, bei dem die Fasern des faserverstärkten Kunststoffs beispielsweise in Form eines Gewebes, z. B. als Schlauch, oder eines Gelages mit einem entsprechenden Kunststoffmatrixwerkstoff getränkt bzw. umgeben werden, wobei das so hergestellte Halbzeug jedoch noch nicht ausgehärtet wird. Erst nach Anordnung des Anstreifbelags, der ebenfalls als Formkörper in Form eines Halbzeugs hergestellt werden kann, erfolgt dann gemäß der Erfindung die gemeinsame Aushärtung bzw. Vernetzung.

Die Aushärtung bzw. Vernetzung kann bei Temperaturen im Bereich 120°C bis 250°C, insbesondere 180°C bis 230°C erfolgen.

Eine entsprechende Dichtungsanordnung kann beispielsweise für das sogenannten Inner Air Seal Verwendung finden, wobei die Dichtungsanordnung zumindest einen Teil eines Innenrings eines Stators bilden kann. Der Dichtungsträger kann hierbei als Ring oder Teil eines Ringes ausgebildet sein, der im Querschnitt quer zur Umfangsrichtung der Ringstruktur eine U-förmige Grundform aufweist, um so einen Aufnahmeraum für die radial innen liegenden Enden der Leitschaufeln eines Leitschaufelkranzes zu definieren. Die entlang der Umfangsrichtung umlaufende Basis der U-förmigen Grundform in Form eines Zylindermantels kann entsprechend an den axialen Enden der Basis bzw. an den Stirnseiten des Zylindermantels angeordnete, radial und in Umfangsrichtung verlaufende Stege aufweisen, die das radial innen liegende Ende einer Leitschaufel einschließen. Der Anstreifbelag kann an der Basis vollflächig angeordnet sein, und zwar über die gesamte Ausdehnung des Anstreifbelags in Umfangsrichtung und axialer Richtung, die sich entsprechend der Achse der Ringstruktur im Zentrum der Ringstruktur parallel zum Ring - bzw. Zylindermantel erstreckt.

Die radial verlaufenden Stege der U-förmigen Grundform des Dichtungsträgers können an den von den Basis abgewandten, radialen Enden unterschiedliche Komponenten, wie beispielsweise Winkelelemente mit axial und radial verlaufenden Abschnitten oder axial verlaufende Endbänder aufweisen, so dass durch die axial verlaufenden Abschnitte ein im Querschnitt rechteckiger Ringhohlraum gebildet ist, in dem die radial innen liegenden Enden der Leitschaufeln eines Leitschaufelkranzes angeordnet sind.

Die Anordnung der Fasern im faserverstärkten Kunststoff des Dichtungsträgers kann in einer gerichteten Art und Weise so erfolgen, dass die Fasern zur Rotationsachse der Strömungsmaschine bzw. zur axialen Richtung der ringförmigen Struktur oder einer dazu parallelen Richtung einen spitzen Winkel von 30° bis 90°, insbesondere 45° bis 90°, vorzugsweise 60° bis 90°, einnehmen, so dass durch die Fasern die Hauptbelastungen der Ringstruktur im Betrieb abgetragen werden können.

### KURZBESCHREIBUNG DER FIGUREN

Die beigefügten Figuren zeigen in rein schematischer Weise in
Fig. 1 eine perspektivische, teilweise geschnittene Ansicht eines Teils einer erfindungsgemäßen Dichtungsanordnung;
Fig. 2 eine Querschnittansicht der Dichtungsanordnung aus Fig. 1;
Fig. 3 eine weitere Querschnittansicht einer weiteren Ausführungsform einer erfindungsgemäßen Dichtungsanordnung; und in
Fig. 4 einen Ausschnitt einer Strömungsmaschine zur Verdeutlichung der Anordnung der Dichtungsanordnung in einer Strömungsmaschine.

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele deutlich. Allerdings ist die Erfindung nicht auf diese Ausführungsbeispiele beschränkt.

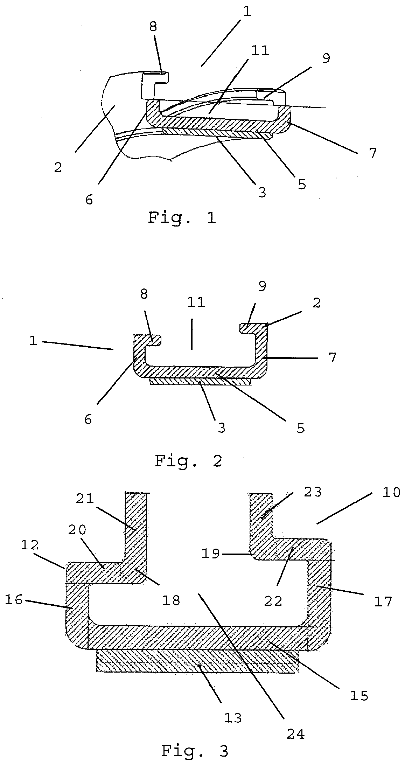

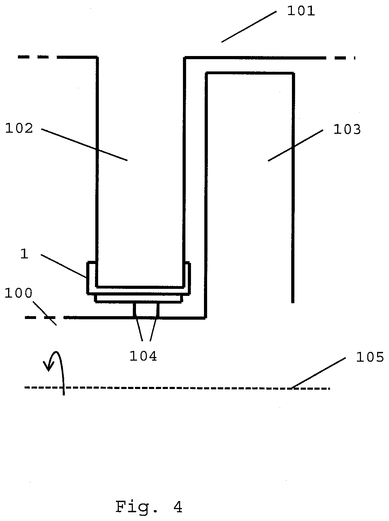

Die Fig. 1 zeigt in einer perspektivischen, teilweise geschnittenen Darstellung einen Teil einer erfindungsgemäßen Dichtungsanordnung 1 in Form eines Innenrings für einen Statorleitschaufelkranz. Ein derartiger Innenring 1 ist bei einem Leitschaufelkranz eines Stators einer Strömungsmaschine am radial innen liegenden Ende der Leitschaufeln gegenüberliegend der Welle angeordnet, wie dies in Fig. 4 dargestellt ist. Dort ist die Welle 100 eines Rotors mit einer Laufschaufel 103 gezeigt, die benachbart zu einer Leitschaufel 102 des Stators 101 angeordnet ist, wobei am radial innen liegenden Ende der Leitschaufel 102 die erfindungsgemäße Dichtungsanordnung 1 angeordnet ist, und mit Dichtfinnen 104 des Rotors im Eingriff ist, um den Spalt zwischen Welle 100 und Leitschaufel 102 abzudichten und somit Strömungsverluste zu vermeiden. Die Drehachse 105 der Strömungsmaschine, die der axialen Richtung der Dichtungsanordnung entspricht und bezüglich der auch die radiale Richtung definiert ist, ist ebenfalls gezeigt.

Die Dichtungsanordnung 1, wie sie in den Figuren 1 und 2 dargestellt ist, weist einen Dichtungsträger 2 auf, der an den Leitschaufeln 102 angeordnet ist, sowie einen Anstreifbelag 3, der mit den Dichtfinnen 104 der Welle 100 des Rotors in der Weise zusammenwirkt, dass die Dichtfinnen 104 zumindest in bestimmten Betriebssituationen an dem Anstreifbelag 3 anstreifen und sich in den Anstreifbelag 3 einschleifen.

Der Dichtungsträger 2 weist eine Basis 5 auf, die sich bandförmig in axialer Richtung, also in Richtung der Drehachse bzw. Strömungsachse der Strömungsmaschine und in Umfangsrichtung um die Drehachse erstreckt. An der Basis 5 ist der Anstreifbelag 3 vollflächig angeordnet. Der Dichtungsträger 2 umfasst weiterhin radial und umlaufend um die Ringachse der Dichtungsanordnung 1 bzw. der Drehachse der Strömungsmaschine Stege 6 und 7 auf, an deren von dem Anstreifbelag 3 entfernten radialen Enden Endbänder 8 und 9 vorgesehen sind, die wiederum in axialer Richtung und umlaufend um die Ringstruktur verlaufen, so dass durch die Basis 5, die radial verlaufenden Stege 6, 7 und die Endbänder 8, 9 ein im Querschnitt rechteckiger, Ringhohlraum 11 gebildet ist, der das radial innen liegende Ende einer Leitschaufel 102 aufnimmt.

Eine weitere Ausführungsform einer erfindungsgemäßen Dichtungsanordnung in Form eines Innenrings für einen Stator einer Strömungsmaschine ist in Fig. 3 gezeigt. Der Innenring 10 der zweiten Ausführungsform der erfindungsgemäßen Dichtungsanordnung unterscheidet sich von der ersten Ausführungsform, die in den Figuren 1 und 2 gezeigt ist, lediglich in der Gestaltung des Dichtungsträgers 12. Der Dichtungsträger 12 umfasst ebenfalls wie der Dichtungsträger 2 eine Basis 15 und radial verlaufende Stege 16 und 17. Allerdings sind an dem von dem Anstreifbelag abgewandten Enden der Stege 16, 17 nicht nur axial verlaufende Endbänder vorgesehen, sondern Winkelelemente 18, 19, die jeweils einen axial verlaufende Abschnitt 20, 22 sowie wiederum radial verlaufende Abschnitte 21 und 24 aufweisen. Dadurch kann ein veränderter Aufnahmebereich für das radial innen liegende Ende der Leitschaufeln 102 einer Strömungsmaschine definiert werden.

Bei beiden Ausführungsformen, die in den Figuren 1 bis 3 gezeigt sind, ist der Dichtungsträger 2 jeweils aus einem faserverstärkten Kunststoff gebildet, während der Anstreifbelag 3, 13 durch einen Silikonwerkstoff, d.h. einem Polysiloxan - Werkstoff gebildet ist. Die Herstellung kann hierbei so erfolgen, dass beispielsweise der Dichtungsträger 2, 12 als sogenanntes Pre-preg produziert wird, beispielsweise mit einem Schlauchgewebe aus den Fasern, die der faserverstärkte Kunststoff umfassen soll, welches dann mit einer entsprechenden Kunststoffmatrix getränkt bzw. versehen wird, die jedoch noch nicht ausgehärtet wird. Erst nachdem ein ebenfalls als unausgehärtetes Halbzeug hergestelltes Silikon - Formteil an dem Prepreg - Dichtungsträgerhalbzeug 2, 12 angeordnet ist, wird eine Aushärtung, beispielsweise bei einer Temperatur zwischen 180 °C und 250 °C durchgeführt, so dass nicht nur jeweils die Materialien des Dichtungsträgers und des Anstreifbelags für sich aushärten und vernetzen, sondern auch gegenseitig, so dass eine gut anhaftende Anordnung des Anstreifbelags 3, 13 an dem Dichtungsträger 2, 12 erzielt wird.

Statt den Dichtungsträger 2, 12 und den Anstreifbelag 3, 13 beide separat als unausgehärtete Halbzeuge herzustellen und diese dann aneinander anzuordnen und auszuhärten, sodass beim Aushärten der Halbzeuge eine Vernetzung zwischen Dichtungsträger 2, 12 und Anstreifbelag 3, 13 erfolgt, kann auch eine teilweise oder vollständige Kombination der Formgebung von Dichtungsträger 2, 12 und/oder Anstreifbelag 3, 13 zusammen mit der Aushärtung und Vernetzung erfolgen. So könnte beispielsweise der Anstreifbelag 3, 13 bereits als nicht ausgehärtetes Halbzeug als Formkörper vorliegen, während der faserverstärkte Kunststoff in einer Form beispielsweise durch Spritzpressen oder Strangziehen geformt wird, wobei gleichzeitig das in der Form ebenfalls angeordnete, nicht ausgehärtete Halbzeug des Anstreifbelags 3, 13 mit dem faserverstärkten Kunststoff des Dichtungsträgers 3, 13 vernetzt. Neben dieser teilweisen Formgebung (im vorliegenden Fall des Dichtungsträgers 3, 13) gleichzeitig mit der Vernetzung mit dem Anstreifbelag kann auch eine vollständige Formgebung von sowohl Dichtungsträger 2, 12 und Anstreifbelag 3, 13 mit gleichzeitiger Vernetzung erfolgen, wenn beispielsweise beide Materialien parallel und zeitgleich nebeneinander, beispielsweise durch Co-Strangziehen, geformt werden.

Damit lässt sich eine einfache, zuverlässige und dauerhafte Anbindung eines Anstreifbelags aus Silikon an einem faserverstärkten Kunststoff erzielen, ohne zusätzliche Bindemittel oder Klebstoffe zwischen dem Dichtungsträger und dem Anstreifbelag vorsehen zu müssen. Dadurch kann der Aufwand bei der Herstellung reduziert werden.

Eine entsprechend hergestellte Dichtungsanordnung kann bei Bedarf mechanisch nachgearbeitet werden, um beispielsweise Grate oder dergleichen zu entfernen.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden können, solange der Schutzbereich der beigefügten Ansprüche nicht verlassen wird. Insbesondere schließt die Offenbarung der vorliegenden Erfindung sämtliche Kombinationen der vorgestellten Einzelmerkmale mit ein.

## Patentansprüche

1. Verfahren zur Herstellung einer Dichtungsanordnung für eine Strömungsmaschine, die einen Dichtungsträger (2,12) und einen Anstreifbelag (3,13) umfasst, der an dem Dichtungsträger angeordnet ist, wobei der Dichtungsträger einen faserverstärkten Kunststoff und der Anstreifbelag Polysiloxan umfasst,
**dadurch gekennzeichnet, dass**
der Dichtungsträger und der Anstreifbelag in einem nicht ausgehärteten Zustand bereit gestellt werden und im unmittelbaren Kontakt zueinander entsprechend der Gestaltung der Dichtungsanordnung (1,10) angeordnet werden und anschließend einem gemeinsamen Aushärtungsprozess unterzogen werden, so dass faserverstärkter Kunststoff und Polysiloxan miteinander chemisch vernetzen.

2. Verfahren nach Anspruch 1,
**dadurch gekennzeichnet, dass**
die Fasern des faserverstärkte Kunststoffs Kohlenstofffasern, Glasfasern, Aramidfasern, Polyesterfasern, Polyvinylacetatfasern, Polypropylenfasern und/oder Polyethylenfasern umfassen.

3. Verfahren nach einem der vorhergehenden Ansprüche,
**dadurch gekennzeichnet, dass**
das Matrixmaterial des faserverstärkten Kunststoffs ein duroplastischer oder thermoplastischer Kunststoff ist.

4. Verfahren nach einem der vorhergehenden Ansprüche,
**dadurch gekennzeichnet, dass**
das Matrixmaterial des faserverstärkten Kunststoffs Polyimidharz, Phenolharz, Vinylester und/oder Epoxidharz umfasst.

5. Verfahren nach einem der vorhergehenden Ansprüche,
**dadurch gekennzeichnet, dass**
der Dichtungsträger in einer Form mit dem Anstreifbelag zu einem nicht ausgehärteten Halbzeug geformt wird.

6. Verfahren nach einem der vorhergehenden Ansprüche,
**dadurch gekennzeichnet, dass**
der Dichtungsträger (2,12) durch Spritzpressen, Strangziehen, Harzinjektionsverfahren oder ein Prepreg - Verfahren hergestellt wird.

7. Verfahren nach einem der vorhergehenden Ansprüche,
**dadurch gekennzeichnet, dass**
der Dichtungsträger und/oder der Anstreifbelag als nicht ausgehärtete Halbzeuge als Formkörper hergestellt werden.

8. Verfahren nach einem der vorhergehenden Ansprüche,
**dadurch gekennzeichnet, dass**
die Formgebung des Dichtungsträgers und/oder des Anstreifbelags und die Vernetzung mit dem Anstreifbelag in einem Verfahrensschritt erfolgt.

9. Verfahren nach einem der vorhergehenden Ansprüche,
**dadurch gekennzeichnet, dass**
die gemeinsame Aushärtung von Dichtungsträger und Anstreifbelag bei Temperaturen im Bereich von 120°C bis 250°C erfolgt.

10. Dichtungsanordnung für eine Strömungsmaschine mit einem Dichtungsträger (2,12) und einem Anstreifbelag (3,13), der an dem Dichtungsträger angeordnet ist, wobei der Dichtungsträger einen faserverstärkten Kunststoff und der Anstreifbelag Polysiloxan umfasst,
**dadurch gekennzeichnet, dass**
das Polysiloxan unmittelbar mit dem faserverstärkten Kunststoff chemisch vernetzt ist.

11. Dichtungsanordnung nach Anspruch 10,
**dadurch gekennzeichnet, dass**
die Dichtungsanordnung zumindest ein Teil eines Innenrings eines Stators ist.

12. Dichtungsanordnung nach einem der Ansprüche 10 oder 11,
**dadurch gekennzeichnet, dass**
der Dichtungsträger als Ring oder Teil eines Ringes ausgebildet ist und im Querschnitt quer zur Umfangsrichtung der Ringstruktur eine U - förmige Grundform mit einer in Umfangsrichtung umlaufenden Basis (5,15) und seitlich an den axialen Enden der Basis angeordnete radial und in Umfangsrichtung verlaufende Stege (6,7;16,17) aufweist, wobei an der Basis der Anstreifbelag (3,13) vorzugsweise vollflächig über die gesamte Ausdehnung des Anstreifbelags in axialer Richtung und Umfangsrichtung angeordnet ist.

13. Dichtungsanordnung nach Anspruch 12,
**dadurch gekennzeichnet, dass**
die radial verlaufenden Stege (6,7; 16,17) an ihren von der Basis abgewandten Enden Winkelelemente mit axial und radial verlaufenden Abschnitten (20,21,22,23) oder axial verlaufenden Endbänder (8,9) aufweisen, wobei die axial verlaufenden Abschnitte mit den radial verlaufenden Stegen einen im Querschnitt rechteckigen Ringhohlraum (11,24) einschließen.

14. Strömungsmaschine, insbesondere stationäre Gasturbine oder Flugzeugtriebwerk, mit einer Dichtungsanordnung nach einem der Ansprüche 10 bis 13, insbesondere hergestellt nach dem Verfahren mit den Merkmalen von einem der Ansprüche 1 bis 9, welche in einem Übergangsbereich zwischen Rotor (100) und Stator (101) angeordnet ist.

15. Strömungsmaschine nach Anspruch 14,
**dadurch gekennzeichnet, dass**
die Fasern des faserverstärkten Kunststoffs so in der Dichtungsanordnung angeordnet sind, dass die Fasern zur Rotationsachse der Strömungsmaschine oder einer dazu parallelen Richtung einen spitzen Winkel von 30° bis 90°, insbesondere 45° bis 90°, vorzugsweise 60° bis 90° einnehmen.

## Claims

1. A method for producing a seal arrangement for a turbo-machine, which comprises a seal carrier (2, 12) and a friction coating (3, 13) which is arranged on the seal carrier, wherein the seal carrier comprises a fiber-reinforced plastic and the friction coating comprises polysiloxane,
**characterized in that**
the seal carrier and the friction coating are provided in a non-cured state and are arranged in direct contact with one another according to the configuration of the seal arrangement (1, 10) and are subsequently subjected to a common curing process, so that fiber-reinforced plastic and polysiloxane cross-link chemically with one another.

2. The method according to claim 1,
**characterized in that**
the fibers of the fiber-reinforced plastic comprise carbon fibers, glass fibers, aramid fibers, polyester fibers, polyvinyl acetate fibers, polypropylene fibers and/or polyethylene fibers.

3. The method according to any of the preceding claims,
**characterized in that**
the matrix material of the fiber-reinforced plastic is a thermosetting or a thermoplastic material.

4. The method according to any of the preceding claims,
**characterized in that**
the matrix material of the fiber-reinforced plastic comprises polyimide resin, phenol resin, vinyl ester and/or epoxy resin.

5. The method according to any of the preceding claims,
**characterized in that**
the seal carrier is molded in a mold with the friction coating to form a non-cured semi-finished product.

6. The method according to any of the preceding claims,
**characterized in that**
the seal carrier (2, 12) is produced by transfer molding, pultrusion, resin-injection molding or a pre-preg method.

7. The method according to any of the preceding claims,
**characterized in that**
the seal carrier and/or the friction coating as non-cured semi-finished products are produced as molded bodies.

8. The method according to any of the preceding claims,
**characterized in that**
the forming of the seal carrier and/or of the friction coating and the cross-linking with the friction coating take place in one step.

9. The method according to any of the preceding claims,
**characterized in that**
the common curing of seal carrier and friction coating takes place at temperatures in the range from 120°C to 250°C.

10. A seal arrangement for a turbo-machine with a seal carrier (2, 12) and a friction coating (3, 13) which is arranged on the seal carrier, wherein the seal carrier comprises a fiber-reinforced plastic and the friction coating comprises polysiloxane,
**characterized in that**
the polysiloxane is chemically cross-linked directly with the fiber-reinforced plastic.

11. The seal arrangement according to claim 10,
**characterized in that**
the seal arrangement is at least part of an inner ring of a stator.

12. The seal arrangement according to any of claims 10 or 11,
**characterized in that**
the seal carrier is configured as a ring or part of a ring and is provided, in a cross-section transverse to the circumferential direction of the annular structure, with a U-shaped base form, having a base (5, 15) extending in the circumferential direction and webs (6, 7; 16, 17), which are arranged laterally at the axial ends of the base and which extend radially and circumferentially, wherein, at the base, the friction coating (3, 13) is arranged preferably completely over the entire extension of the friction coating in the axial and circumferential direction.

13. The seal arrangement according to claim 12,
**characterized in that**
the radially oriented webs (6, 7; 16, 17) are provided, at their ends facing away from the base, with angular elements having axially and radially oriented portions (20, 21, 22, 23) or axially oriented end strips (8, 9) wherein the axially oriented portions having the radially oriented webs enclose an annular cavity (11, 24) having a rectangular cross section.

14. A turbo-machine, in particular a stationary gas turbine or an aircraft engine, having a seal arrangement according to any of claims 10 to 13, which is in particular produced according to the method having the features of any of claims 1 to 9, which seal arrangement is arranged in a transition region between rotor (100) and stator (101).

15. The turbo-machine according to claim 14,
**characterized in that**
the fibers of the fiber-reinforced plastic are arranged in the seal arrangement such that, relative to the axis of rotation of the turbo-machine or a direction parallel thereto, the fibers form an acute angle of 30° to 90°, in particular 45° to 90°, preferably 60° to 90°.

## Revendications

1. Procédé de fabrication d'un dispositif d'étanchéité pour une turbomachine qui comprend un porte-joint (2, 12) et un revêtement abrasif (3, 13), qui est disposé sur le porte-joint, dans lequel le porte-joint comprend un matériau plastique renforcé par des fibres et le revêtement abrasif comprend du polysiloxane,
**caractérisé en ce que**
le porte-joint et le revêtement abrasif sont mis en place dans un état non-durci et sont disposés en contact immédiat l'un avec l'autre conformément à l'agencement du dispositif d'étanchéité (1, 10) puis sont ensuite soumis à un processus de durcissement commun, de sorte que le matériau plastique renforcé par des fibres et le polysiloxane soient réticulés chimiquement l'un à l'autre.

2. Procédé selon la revendication 1,
**caractérisé en ce que**
les fibres du matériau plastique renforcé par des fibres comportent des fibres de carbone, des fibres de verre, des fibres d'aramide, des fibres de polyester, des fibres de polyacétate de vinyle, des fibres de polypropylène et/ou des fibres de polyéthylène.

3. Procédé selon l'une quelconque des revendications précédentes,
**caractérisé en ce que**
le matériau de matrice du matériau plastique renforcé par des fibres est un plastique thermodurcissable ou thermoplastique.

4. Procédé selon l'une quelconque des revendications précédentes,
**caractérisé en ce que**
le matériau de matrice du plastique renforcé par des fibres comprend de la résine de polyimide, de la résine phénolique, de l'ester de vinyle et/ou de la résine époxyde.

5. Procédé selon l'une quelconque des revendications précédentes,
**caractérisé en ce que**
le porte-joint est formé dans une forme avec le revêtement abrasif en un produit semi-fini non-durci.

6. Procédé selon l'une quelconque des revendications précédentes,
**caractérisé en ce que**
le porte-joint (2, 12) est fabriqué par un procédé de moulage par transfert, de pultrusion, d'injection de résine ou par un procédé de pré-imprégné.

7. Procédé selon l'une quelconque des revendications précédentes,
**caractérisé en ce que**
le porte-joint et/ou le revêtement abrasif sont fabriqués sous forme de produit semi-fini non-durci sous forme de corps façonné.

8. Procédé selon l'une quelconque des revendications précédentes,
**caractérisé en ce que**
le formage du porte-joint et/ou du revêtement abrasif et la réticulation avec le revêtement abrasif s'effectuent lors d'une étape du procédé.

9. Procédé selon l'une quelconque des revendications précédentes,
**caractérisé en ce que**
le durcissement commun du porte-joint et du revêtement abrasif s'effectue à des températures comprises dans la plage allant de 120 °C à 250 °C.

10. Dispositif d'étanchéité pour une turbomachine comportant un porte-joint (2, 12) et un revêtement abrasif (3, 13), qui est disposé sur le porte-joint, dans lequel le porte-joint comprend un matériau plastique renforcé par des fibres et le revêtement abrasif comprend du polysiloxane,
**caractérisé en ce que**
le polysiloxane est immédiatement réticulé chimiquement avec le matériau plastique renforcé par des fibres.

11. Dispositif d'étanchéité selon la revendication 10,
**caractérisé en ce que**
le dispositif d'étanchéité est au moins une partie d'une bague intérieure d'un stator.

12. Dispositif d'étanchéité selon l'une quelconque des revendications 10 ou 11,
**caractérisé en ce que**
le porte-joint est formé sous forme de bague ou de partie d'une bague et présente, en coupe transversale en travers de la direction circonférentielle de la structure de bague, une forme de base en U avec une base (5, 15) périphérique en direction circonférentielle et présente, latéralement sur les extrémités axiales de la base, des traverses (6, 7 ; 16, 17) disposées radialement et s'étendant en direction circonférentielle, dans lequel, sur la base, le revêtement abrasif (3, 13) est disposé de préférence sur toute la surface sur l'étendue totale du revêtement abrasif dans une direction axiale et dans une direction circonférentielle.

13. Dispositif d'étanchéité selon la revendication 12,
**caractérisé en ce que**
les traverses (6, 7 ; 16, 17) s'étendant radialement présentent, sur leurs extrémités opposées à la base, des éléments d'angle avec des sections (20, 21, 22, 23) s'étendant axialement ou radialement ou des bandes d'extrémité (8, 9) s'étendant axialement, dans lequel les sections s'étendant axialement intègrent, avec les traverses s'étendant radialement, une cavité de bague (11, 24) rectangulaire en coupe transversale.

14. Turbomachine, notamment turbine à gaz ou réacteur d'avion, comportant un dispositif d'étanchéité selon l'une quelconque des revendications 10 à 13, notamment fabriquée selon le procédé avec les caractéristiques de l'une des revendications 1 à 9, laquelle est disposée dans une zone de transition entre le rotor (100) et le stator (101).

15. Turbomachine selon la revendication 14,
**caractérisée en ce que**
les fibres du matériau plastique renforcé par des fibres sont disposés de telle sorte dans le dispositif d'étanchéité que les fibres pour l'axe de rotation de la turbomachine ou d'une direction parallèle à celle-ci occupent un angle aigu de 30° à 90°, notamment de 45° à 90°, de préférence 60° à 90°.
